# EUROPEAN PATENT APPLICATION

(11) **EP 4 831 088 A1**
(43) Date of publication of application: **28.10.2026**
(21) Application number: 25172503.2
(22) Date of filing: 25.04.2025
(51) Int. Cl.: B65G 1/04, B65G 1/06, B65G 1/137

(54) **A ROBOT FOR TRAVELING ON THE RAILS OF AN AUTOMATED STORAGE AND RETRIEVAL SYSTEM**

(71) Applicant: AutoStore Technology AS, 5578 Nedre Vats (NO)
(72) Inventor: Austrheim, Trond, 5578 Nedre Vats (NO); Fjeldheim, Ivar, 5578 Nedre Vats (NO)
(74) Representative: Kilburn & Strode LLP

(57) **Abstract**

The disclosure relates to a robot for traveling on the rails of an automated storage and retrieval system comprising cells in which containers may be stored. The robot comprises: a moveable picker arm for picking items from containers within cells of said automated storage and retrieval system; and a storage drawer, wherein the storage drawer is moveable from a retracted position to an extended position wherein in said extended position, the storage drawer may be positioned underneath said picker arm.

## Description

### TECHNICAL FIELD

The disclosure relates to a robot for traveling on the rails of an automated storage and retrieval system. More particularly, it relates to a robot for traveling on the rails of an automated storage and retrieval system comprising: a moveable picker arm for picking items from containers within cells of said automated storage and retrieval system; and a storage drawer, wherein the storage drawer is moveable from a retracted position to an extended position. It also relates to an automated storage and retrieval system comprising one or more robots as well as a method of picking items from an automated storage and retrieval system using said robot.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles are capable of travelling at high speeds in X and Y directions along the rails, and a control system is provided to optimise route planning for picking items from containers in the grid.

In known automated storage and retrieval systems, a robotic container handling vehicle retrieves an item stored in a container within the grid by delivering a container with a desired item to a packing station or port. Additional items in different containers are retrieved by additional robotic container handling vehicles.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a front perspective view of a robot with a picker arm and a storage drawer in a retracted state;
Fig. 6 shows a rear perspective view of the robot of Fig. 5;
Fig. 7 shows the robot of Fig. 5 with its picker arm extended into a container;
Fig. 8 shows the robot of Fig. 5 with its picker arm lifting an item from a container;
Fig. 9 shows the robot of Fig. 5 with the storage drawer in an extended position under the picker arm;
Fig. 10 shows the robot of Fig. 5 and the picker arm having placed an item on the storage drawer;
Fig. 11 shows the robot of Fig. 5 with the storage drawer in an angled position; and
Fig. 12 shows the robot of Fig. 5 with the storage drawer in a more steeply angled position and the item dropping into a container.

### DETAILED DESCRIPTION

In overview, the disclosure relates to a robot for traveling on the rails of an automated storage and retrieval system comprising cells in which containers may be stored. The robot comprises: a moveable picker arm for picking items from containers within cells of said automated storage and retrieval system. In addition, the robot comprises a storage drawer, wherein the storage drawer is moveable from a retracted position to an extended position. In said extended position, the storage drawer may be positioned underneath said picker arm. The effect of the storage drawer is that items can be picked by the picker arm and placed on the storage drawer. The robot can then be moved to a desired cell, container of port in the system and the items dispensed by the drawer.

### Automated storage and retrieval system overview

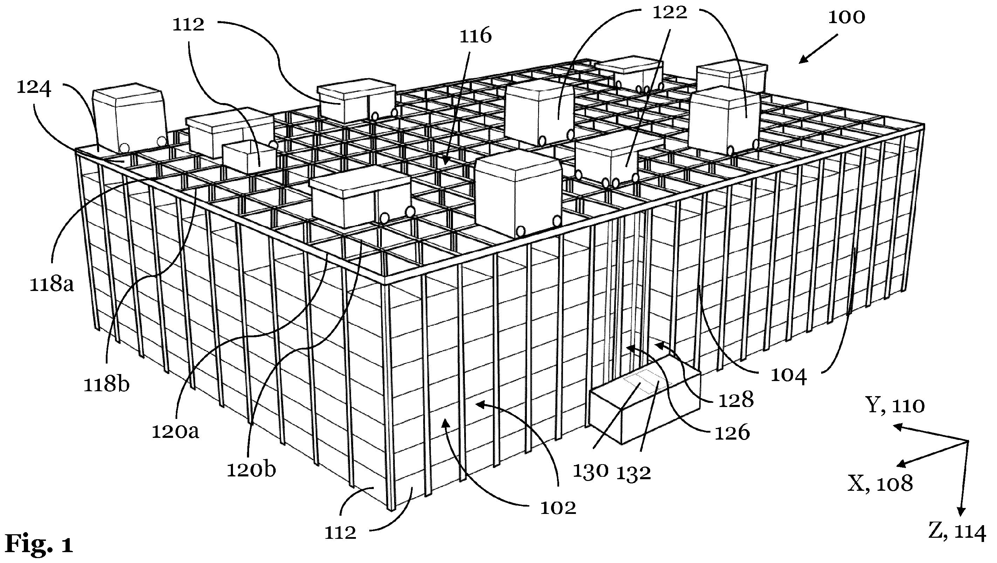

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

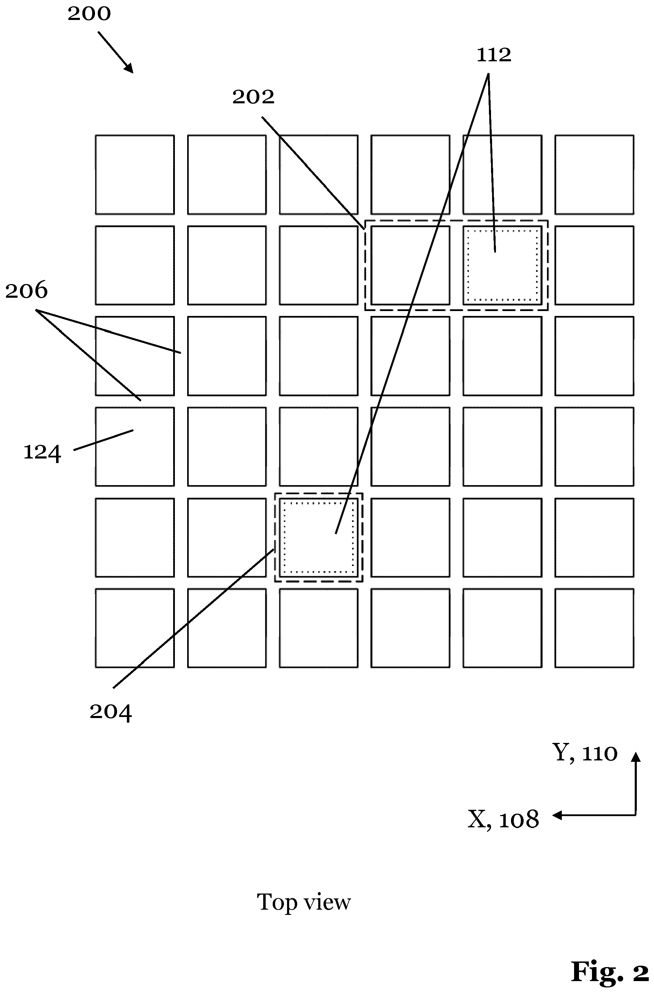

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

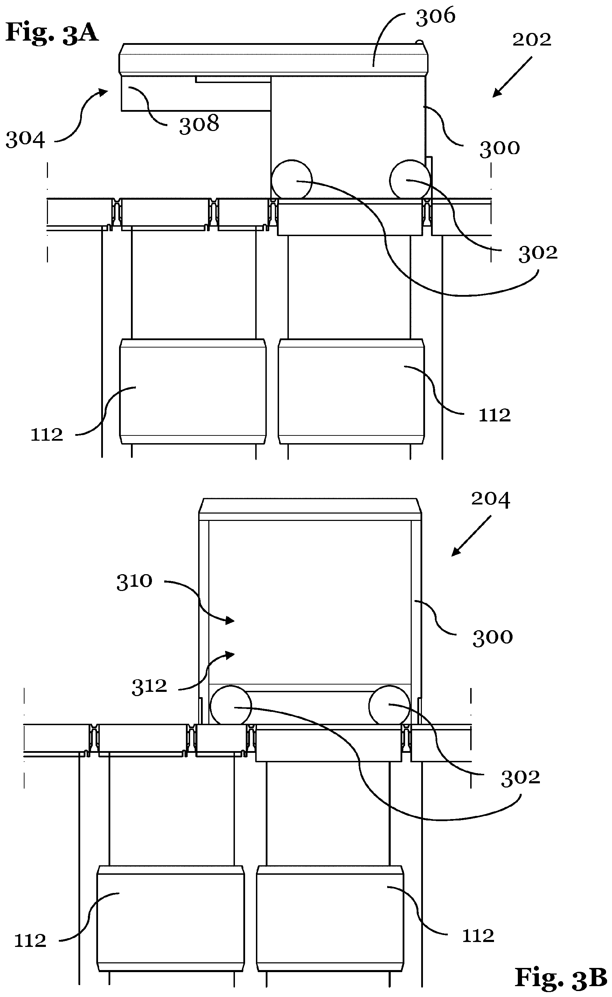

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

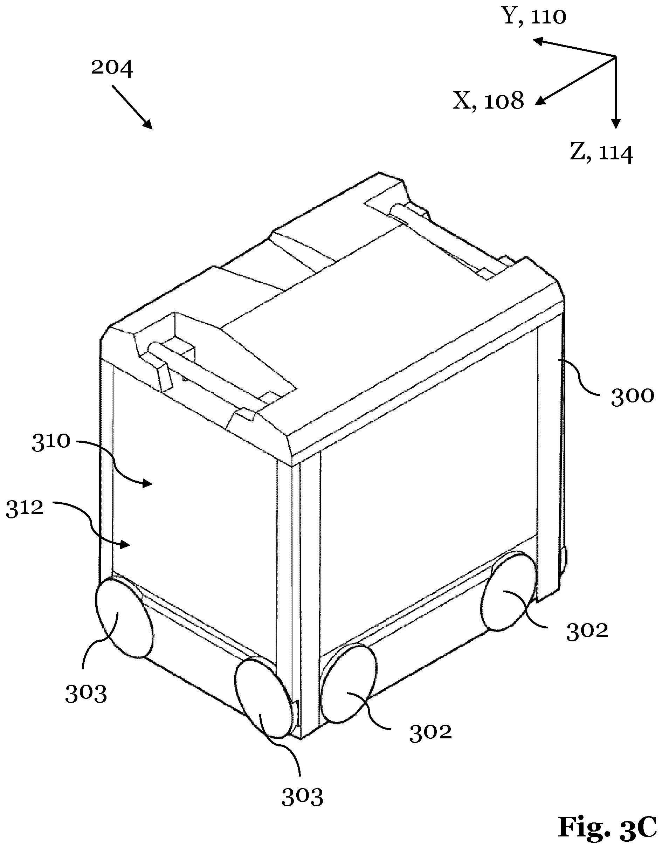

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

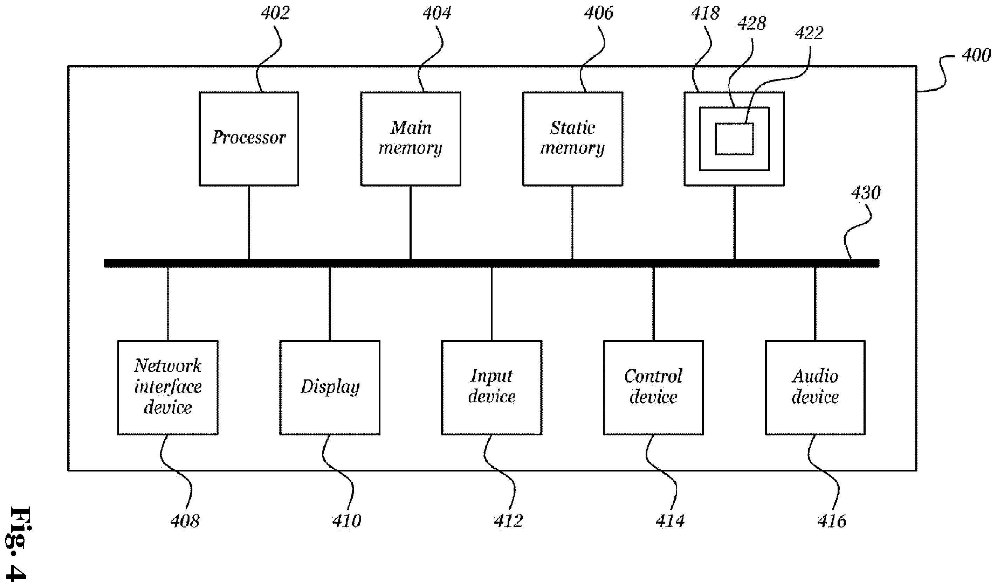

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

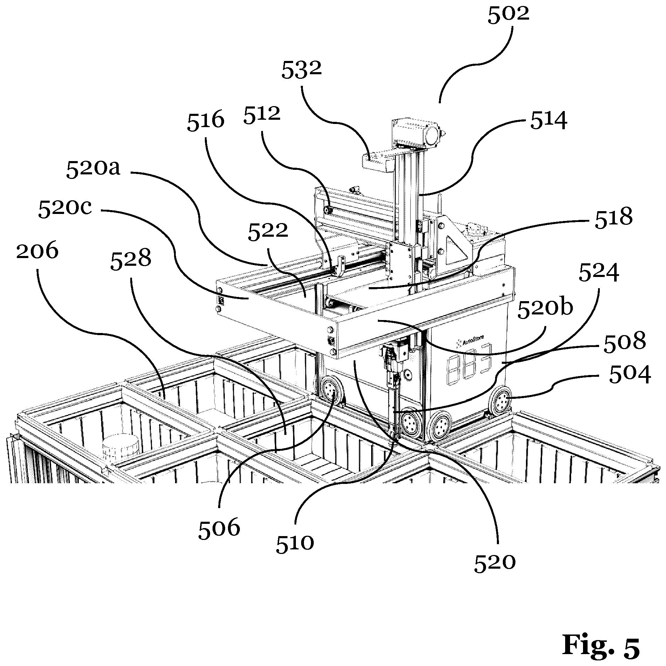

Fig. 5 shows a front perspective view of a robot 502. The robot 502 has sets of wheels 504, 506 which are configured in the same way to those of the robot of Fig. 3B. Each set of wheels 504, 506 comprises two pairs of wheels on opposing sides of the main body 524 of the robot 502. The main body 524 of the robot 502 is substantially cuboid is shape and contains a batter, control units and drive means for the robot 502. The wheels 504, 506 permit movement of the robot 502 in one of the X and Y directions, an additional set of wheels permitting movement in the other of the X and Y directions, in both cases along the respective rails or tracks 206. One or both sets of wheels can be raised or lowered to permit selective engagement of the rails for movement in the desired direction. The sets of wheels 504, 506 are provided with drive means to drive the wheels to move the robot 502 on the rails 206.

The robot 502 includes a picker arm 508 with means to pick items such as with a grabber arm or suction head 510. The picker arm 508 is a generally vertically arranged arm although a jointed arm or any other type of picking mechanism is also envisaged. The picker arm 508 includes drive mechanisms 512, 514, 516 to move the picker arm in orthogonal X, Y and Z directions. In Fig. 5, the picker arm is shown located just above the opening of an adjacent cell to that above which the main body 524 of the robot 502 is located. In operation, the robot 502 may be sent to a cell adjacent to which desired items are stored in a container 528. It may be necessary to lift containers from a grid column such that the uppermost container contains those items to be picked. The movement of the robot 502 including the picker arm can be controlled remotely by a control system such as that described in relation to Fig. 4.

The robot 502 may be provided with a camera or other type of optical device or sensor 532 on the picker arm 508 in order to assist with locating and identifying items in a container. In the example, the optical device 532 is arranged towards the top end of the picker arm 508.

The robot 502 has a storage drawer 518 which in Fig. 5 is shown in its fully retracted position. In this position, the storage drawer 518 is substantially horizontal. The storage drawer comprises a generally planar surface. One or more raised edges or guards may be provided around at least some of the perimeter of the storage drawer 518 to prevent items stored on the storage drawer inadvertently falling off. The edge furthest from the main body 524 of the robot 502 is typically free from any raised edges such that items may slide off the storage drawer 518 without hindrance when the storage drawer 518 is tilted.

A frame 520 comprising of two side arms 520a, 520b and a cross member 520c extends from the robot 502 and provides a rectangular aperture 522 substantially the size of a cell opening. The frame 520 guides and supports the storage drawer 518 as it is extended. The aperture 522 defines a working area within which the picker arm 508 operates and when contained within the frame 520, the picker arm may be protected from other robots passing on adjacent rails.

As can be seen in Fig. 5, the robot 502 and the frame 520 together extend over the area of two adjacent cells. This allows two such robots to operate adjacent to one another.

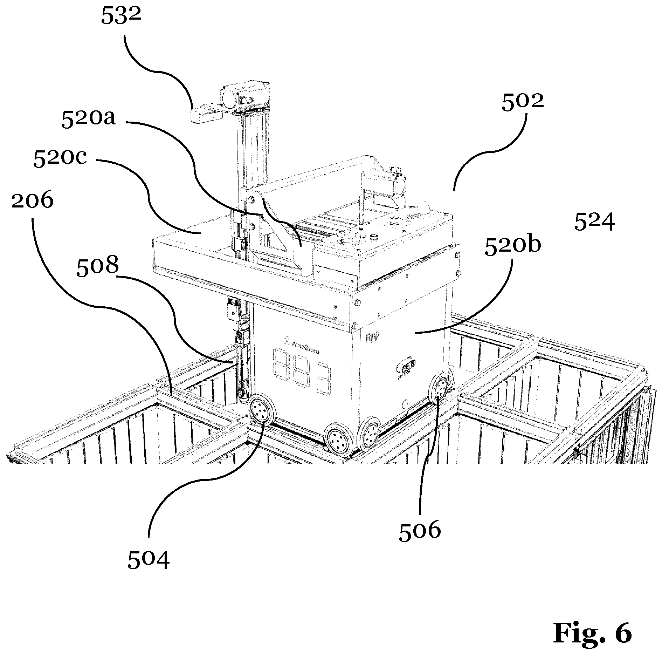

Fig. 6 shows a rear perspective view of the robot 502 of Fig 5. In this view, two rear wheels of one of the sets of wheels 506 can be seen.

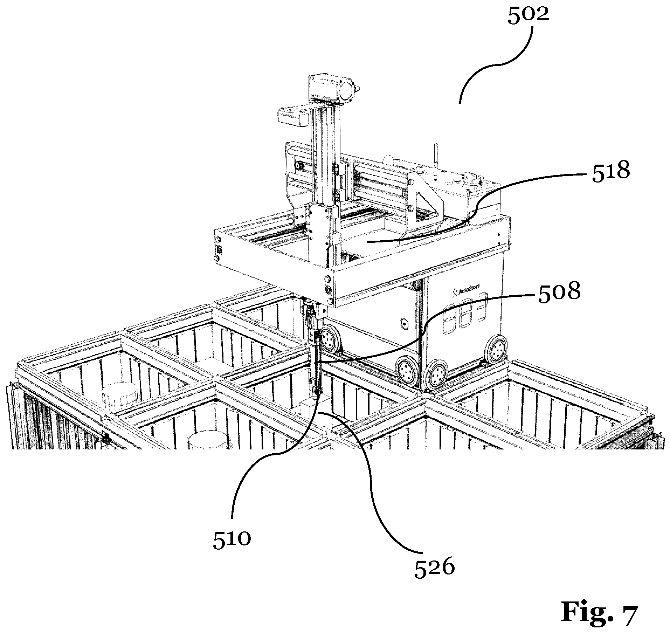

In Fig. 7, the picker arm 508 is shown in an extended position in contact with a desired item 526. The desired item may have been identified through an optical recognition system or manually by a remote user operative of the robot 502. The grabber 510 such as a vacuum coupling may grab the desired item 526.

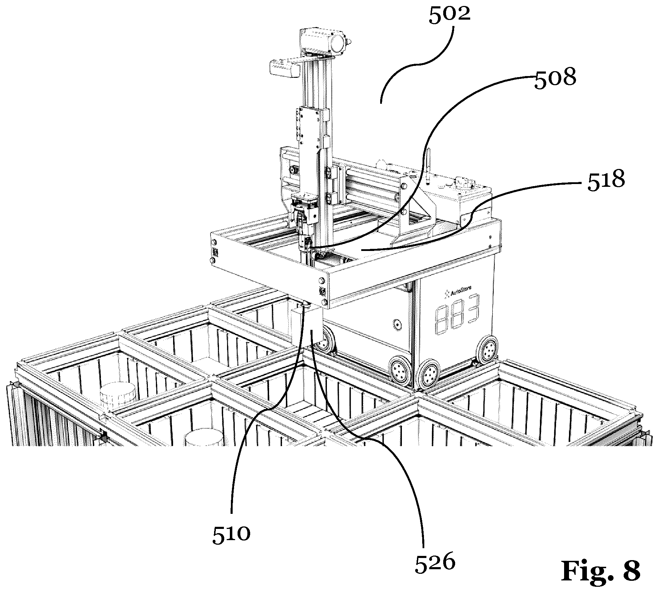

In Fig. 8, the picker arm 508 is shown in a partially vertically retracted position as it lifts the desired item 526 vertically from container 528.

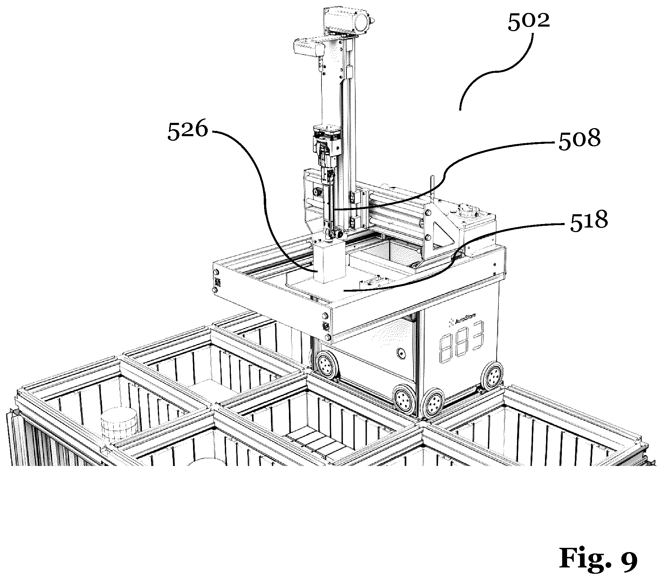

In Fig. 9, the picker arm 508 is shown in a retracted position in which the desired item 526 is located above the level of the storage drawer 518. When the desired item 526 is located above the level of the storage drawer 518, the storage drawer may move from its retracted position to an extended position so that it is located under the picker arm 508 and the desired item 526 being held by the picker arm 508.

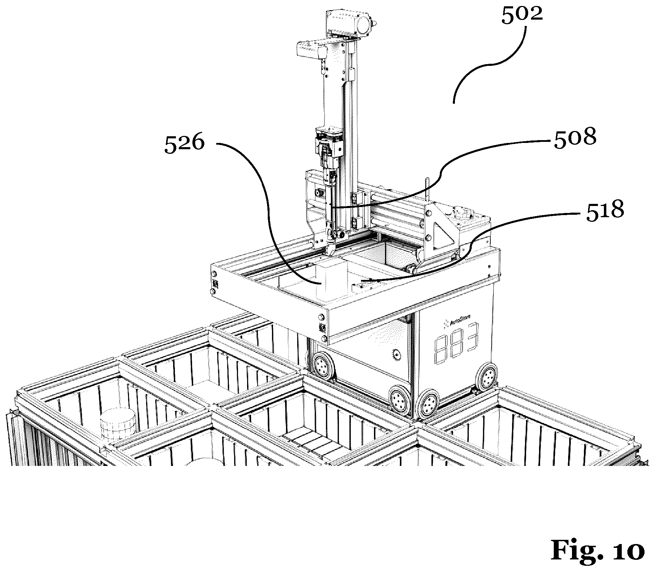

In Fig. 10, the desired item has been dispensed or let go by the grabber 510 of the picker arm 508 such that it is located or placed atop the storage drawer 518. The storage drawer 518 may then be retracted above the main body 524 of the robot 502 with the items in place atop the drawer 518. Further items may be picked in the same location or in a different location to which the robot 502 is moved. When a further item is picked, this is done by extending the picker arm 508 as described above. The storage drawer 518 may be extended once the picker arm is above the level of the storage drawer 518 and the item placed atop the storage drawer 518 by the picker arm 508. This picking process can be repeated until the storage drawer 518 is full and/or all desired items have been picked. The storage drawer 518 can be retracted above the main body 524 of the robot 502 or remain in its extended position whilst the robot 502 is moved.

The robot 502 may be moved to a location where the desired item is required, such as a port or another container in which items are to be packed. The robot 502 may be moved at any time after the item 526 has been picked by the picker arm 508 such that efficient operation may be achieved.

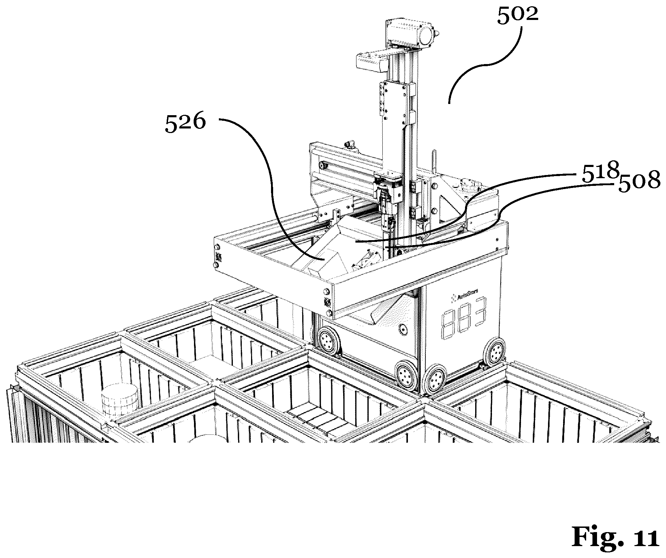

In Fig 11, the desired item 526 is being dispensed by the storage drawer 518. In the example, the storage drawer 518 is in its extended position and is configured to tilt to an angle below horizontal such that the desired item 526 slides off the free edge of the storage drawer 518. The tilt may be achieved using a pivotable coupling which may include a gear or pneumatic system other means to tilt the storage drawer 518. As an alternative arrangement not shown, the storage drawer may include an openable aperture to release items. In another arrangement not shown, items may also be dispensed by providing a scraper and retracting the storage drawer 518 such that desired items are pushed off the storage drawer 518 as they contact such a scraper for example.

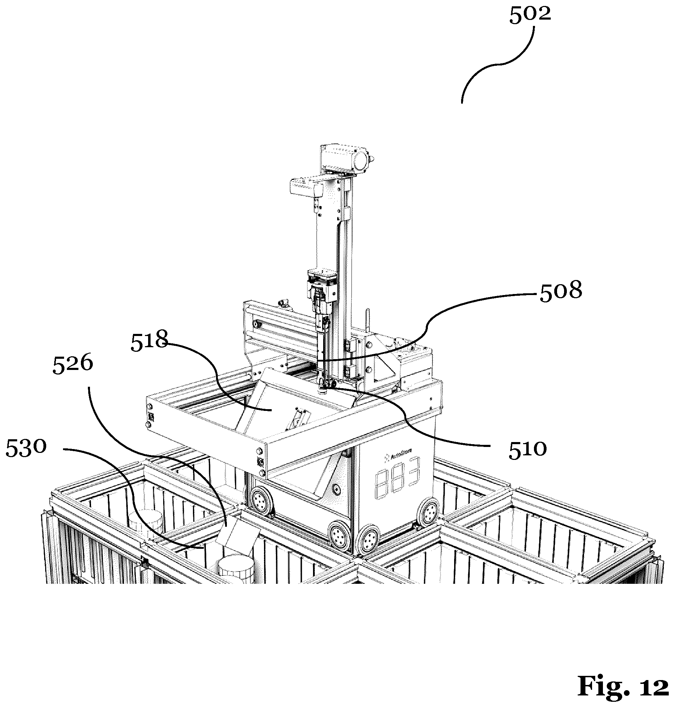

In Fig. 12, the desired item 526 can be seen falling into a container 530. The container 530 may be used to collect multiple items picked by the robot 502 or by a plurality of similar such robots.

Although Figs. 5 to 12 show only one item being picked by the picker arm 508, it should be understood that the storage drawer 518 can be arranged and located such that the picker arm 508 can be operated to pick items from more than one container and place them multiple items on the storage drawer 518. The picker arm may be configured to pick multiple items simultaneously form a container.

With the arrangement as described, items can be readily picked from containers and placed in a storage drawer as an intermediate holding area which avoids the need to move a whole container with the required items. The items can then be dispensed together where they are required.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robot for traveling on the rails of an automated storage and retrieval system comprising cells in which containers may be stored, said robot comprising: a moveable picker arm for picking items from containers within cells of said automated storage and retrieval system; and a storage drawer, wherein the storage drawer is moveable from a retracted position to an extended position wherein in said extended position, the storage drawer may be positioned underneath said picker arm.

2. A robot according to claim 1, comprising one or more guide rails for guiding said drawer between said retracted position and said extended position.

3. A robot according to claim 2, wherein the guide rails are provided on two frame members which extend from the robot.

4. A robot according to claim 3, wherein the two frame members are connected to a cross-frame member at their ends distal the robot.

5. A robot according to claim 4, wherein the two frame members, the cross-member and a generally vertical side of the robot define an aperture which generally corresponds to the a cell opening of said automated storage and retrieval system.

6. A robot according to claim 5, wherein the picker arm is configured to operate within the aperture.

7. A robot according to any of the preceding claims, wherein drive means are provided to move the picker arm.

8. A robot according to any of the preceding claims, wherein the storage drawer includes a pivotable coupling with the robot such that the storage drawer may be rotated about said coupling to rotate the drawer from a horizontal orientation to an inclined angle to the horizontal.

9. A robot according to any of the preceding claims, wherein the storage drawer has a raised edge along at least a portion of its perimeter.

10. A robot according to any of the preceding claims, wherein the storage drawer is retractable above a main body of the robot with items atop said storage drawer.

11. A robot according to any of the preceding claims, wherein the storage drawer is fully retractable such that it does not extend into the aperture formed by the two frame members, the cross-member and the vertical side of the robot.

12. A robot according to any of the preceding claims, wherein the robot has a footprint corresponding to or less than the area of two cells of the automated storage and retrieval system.

13. An automated storage and retrieval system comprising one or more robots according to any of claims 1 to 12.

14. A method of picking items from an automated storage and retrieval system, the method including the steps of: moving a robot according to any of claims 1 to 13 adjacent to a cell in which items to be picked are stored; picking one or more items from a container in said adjacent cell using said picker arm; extending said storage drawer to the extended position; and using the picker arm, placing the one or more items on the storage drawer.

15. A method according to claim 14, further comprising moving said robot adjacent to a cell in which picked items are to be placed; and moving said drawer to dispense the items into said adjacent cell in which picked items are to be placed.
